# EUROPÄISCHE PATENTANMELDUNG

(11) **EP 1 410 900 A1**
(43) Veröffentlichungstag der Anmeldung: **21.04.2004**
(21) Anmeldenummer: 02023278.1
(22) Anmeldetag: 17.10.2002
(51) Int. Cl.: B32B 7/14

(54) **Verfahren zur Herstellung einer Verbundbahn**

(71) Anmelder: Reifenhäuser GmbH & Co. Maschinenfabrik, 53839 Troisdorf (DE)
(72) Erfinder: Krämer, Walter, 53225 Bonn (DE)
(74) Vertreter: Rohmann, Michael, Dr.

(57) **Zusammenfassung**

Verfahren zur Herstellung einer Verbundbahn (1) aus zumindest einer offenporigen Werkstoffbahn (2) und zumindest einer als Folienbahn (3) ausgeführten Werkstoffbahn. Auf einer ersten Werkstoffbahn wird ein aus einer Mehrzahl von Düsenöffnungen (4) austretendes schmelzflüssiges Verbindungspolymer fadenförmig mit der Maßgabe aufgespritzt, dass zwischen den Verbindungspolymerfäden (5) verbindungspolymerfreie Bereiche (6) auf der Werkstoffbahn verbleiben. Die zweite Werkstoffbahn wird unter Zwischenschaltung des schmelzflüssigen Verbindungspolymers auf die erste Werkstoffbahn aufgebracht.

## Beschreibung

Die Erfindung betrifft ein Verfahren zur Herstellung einer Verbundbahn aus zumindest einer offenporigen Werkstoffbahn und zumindest einer als Folienbahn ausgeführten Werkstoffbahn. Die Erfindung betrifft also beispielsweise die Bildung einer Verbundbahn aus einem Vliesstoff bzw. einer Vliesbahn und einer Kunststofffolienbahn.

Aus der Praxis sind verschiedene Verfahren zur Herstellung einer Verbundbahn der oben genannten Art bekannt. Dabei wird insbesondere eine Nonwoven-Vliesbahn mit einer atmungsaktiven und wasserundurchlässigen Kunststofffolie bzw. Membranfolie verbunden. Die Verbindung zwischen diesen beiden Werkstoffbahnen kann beispielsweise durch Ultraschall-Verschweißung erfolgen. Die Verbindung erfolgt in der Praxis aber auch mit Hilfe eines Klebers, der dann flächig bzw. vollflächig auf einer Werkstoffbahn aufgebracht wird und anschließend wird die andere Werkstoffbahn unter Zwischenschaltung des Klebers auf die erste Werkstoffbahn geklebt. Diese bekannten Verfahren zeichnen sich durch den beachtlichen Nachteil aus, dass die Atmungsaktivität der Folienbahn negativ beeinträchtigt wird. Außerdem erfolgt bei dieser Verbindungsart oftmals eine unerwünschte Verhärtung und Verdichtung im Verbindungsbereich und dadurch wird auch der Weichheitsgrad der Verbundbahn bzw. der Vliesbahn negativ beeinflusst. Die mit den bekannten Verfahren hergestellten Verbundbahnen sind im Übrigen normalerweise nur schwierig recyclebar. Insoweit stellen die bekannten Verbundbahnen im Hinblick auf ihre Umweltverträglichkeit ein Problem dar.

Demgegenüber liegt der Erfindung das technische Problem zugrunde, ein Verfahren der eingangs genannten Art anzugeben, mit dem gewährleistet werden kann, dass die gewünschten Eigenschaften der beiden Werkstoffbahnen in der Verbundbahn erhalten bleiben bzw. bei der Verbindung nicht negativ beeinträchtigt werden und mit dem die oben beschriebenen Nachteile effektiv vermieden werden können.

Zur Lösung dieses technischen Problems lehrt die Erfindung ein Verfahren zur Herstellung einer Verbundbahn aus zumindest einer offenporigen Werkstoffbahn und zumindest einer als Folienbahn ausgeführten Werkstoffbahn,
wobei auf einer ersten Werkstoffbahn ein aus einer Mehrzahl von Düsenöffnungen austretendes schmelzflüssiges Verbindungspolymer fadenförmig mit der Maßgabe aufgespritzt wird, dass zwischen den Verbindungspolymerfäden verbindungspolymerfreie Bereiche auf der ersten Werkstoffbahn verbleiben
und wobei die zweite Werkstoffbahn unter Zwischenschaltung des schmelzflüssigen Verbindungspolymers auf die erste Werkstoffbahn aufgebracht wird.

Die beiden Werkstoffbahnen bestehen zweckmäßigerweise jeweils aus einem Kunststoff. Der Begriff Verbindungspolymer meint im Rahmen der Erfindung ein Polymer für die Verbindung der beiden Werkstoffbahnen zur Verbundbahn. Zur Erzeugung der Fäden aus dem Verbindungspolymer sind zweckmäßigerweise eine Mehrzahl von Düsenöffnungen bzw. eine Mehrzahl von Düsen parallel geschaltet. - Erfindungsgemäß erfolgt also im Gegensatz zu den aus dem Stand der Technik bekannten Maßnahmen kein flächiges bzw. vollflächiges Aufbringen eines Klebers, sondern das schmelzflüssige Verbindungspolymer wird in Form von Fäden bzw. Filamenten auf eine Werkstoffbahn aufgebracht und zwischen den Verbindungspolymerfäden verbleiben Bereiche auf der Werkstoffbahn, in denen kein Verbindungspolymer bzw. keine Verbindungspolymerfäden aufgebracht sind. Vorzugsweise wird das Verfahren so geführt, dass zumindest 30 % der Fläche, bevorzugt zumindest 40 % der Fläche der ersten Werkstoffbahn von Verbindungspolymerfäden frei bleiben. Bevor die auf die erste Werkstoffbahn aufgebrachten schmelzflüssigen Verbindungspolymerfäden erstarren, wird zweckmäßigerweise die zweite Werkstoffbahn auf die Verbindungspolymerfäden aufgebracht und nach Erstarren des Verbindungspolymers ergibt sich eine Verbundbahn mit überraschend fester Verbindung der beiden Werkstoffbahnen. Bevorzugt ist eine Werkstoffbahn, eine Vliesbahn oder eine gewebte Bahn. Es liegt also im Rahmen der Erfindung, dass mit einer Vliesbahn oder einer gewebten Bahn als offenporige Werkstoffbahn gearbeitet wird. Die Vliesbahn kann aus Filamenten und/oder Fasern aus thermoplastischem Kunststoff bestehen. Mit Filamenten sind in diesem Zusammenhang theoretisch unendlich lange einzelne Kunststofffäden gemeint, aus denen ein Nonwoven-Vlies gebildet werden kann. Dabei sind die einzelnen Filamente in der Regel miteinander an Kreuzungsstellen und Berührungsstellen im Vlies stoffschlüssig vereinigt. Solche Vliesbahnen werden auch als Spinnvliesbahnen bezeichnet. Fasern meint demgegenüber kurze, faserförmige Kunststoffelemente, die beispielsweise mit Hilfe der Meltblown-Technik erzeugt werden können und ein Meltblown-Vlies bilden, dessen Fasern ebenfalls an den Kreuzungsstellen und Berührungsstellen normalerweise stoffschlüssig vereinigt sind.

Es liegt im Rahmen der Erfindung, dass mit einer Kunststofffolienbahn als Folienbahn gearbeitet wird. Es liegt fernerhin im Rahmen der Erfindung, dass es sich um eine atmungsintensive bzw. atmungsaktive und wasserundurchlässige Folienbahn, vorzugsweise Kunststofffolienbahn handelt. Die Kunststofffolienbahn besteht zweckmäßigerweise aus zumindest einem Polyolefin.

Nach einer Ausführungsform ist die erste Werkstoffbahn, auf die das Verbindungspolymer aufgebracht wird, die Folienbahn und dann wird die offenporige Werkstoffbahn, insbesondere die Vliesbahn als zweite Werkstoffbahn unter Zwischenschaltung des Verbindungspolymers auf die Folienbahn aufgebracht. Nach Erstarren des schmelzflüssigen Verbindungspolymers resultiert eine feste Verbindung zwischen beiden Werkstoffbahnen.

Erfindungsgemäß wird das schmelzflüssige Verbindungspolymer fadenförmig auf die erste Werkstoffbahn aufgebracht bzw. aufgespritzt. Fadenförmig meint dabei, dass das Verbindungspolymer in Form von Filamenten bzw. Fäden oder Fasern aus den Düsenöffnungen austritt und auf der ersten Werkstoffbahn abgelegt wird. Zweckmäßigerweise wird das schmelzflüssige Verbindungspolymer mit einer Fadendicke von 10 bis 50 µm, vorzugsweise 10 bis 40 µm, bevorzugt 10 bis 30 µm, aufgespritzt. Fadendicke meint hier den Fadendurchmesser. Dabei ist die Fadendicke in dem auf die erste Werkstoffbahn aufgebrachten und bereits erstarrten Zustand des Verbindungspolymers gemeint.

Es liegt im Rahmen der Erfindung, dass das Verbindungspolymer in Form von wellenförmigen Fäden auf die erste Werkstoffbahn aufgespritzt wird. Das Verbindungspolymer tritt zweckmäßigerweise bereits in Form wellenförmiger Fäden aus den Düsenöffnungen aus. Ein Verbindungspolymerfaden ist also bevorzugt nicht linear, sondern wellenförmig mit Wellenbergen und Wellentälern ausgebildet. Die Wellenform des austretenden bzw. abgelegten Verbindungspolymerfadens lässt sich durch Amplitude und Frequenz charakterisieren. Die Wellenform kann symmetrisch oder unsymmetrisch sein. Es liegt im Rahmen der Erfindung, dass die Verbindungspolymerfäden als omegaförmige Wellen aus den Düsenöffnungen austreten und auf der ersten Werkstoffbahn abgelegt werden.

Wie der Fachmann die erfindungsgemäßen wellenförmigen Fäden bzw. Filamente erzeugen kann, erfährt er beispielsweise aus den Druckschriften US 5 882 573, US 5 902 540 oder US 5 904 298. Diese Druckschriften betreffen Düsen, aus deren Düsenöffnungen ein Kleber (Adhäsivstoff) in Form von wellenförmigen Fäden bzw. Filamenten austritt. Die Wellenform wird durch die Strömungsverhältnisse in bzw. an den Düsen bzw. Düsenöffnungen erzeugt und beeinflusst. Nach sehr bevorzugter Ausführungsform der Erfindung wird eine Düsenöffnung für das Verbindungspolymer flankiert von zwei Düsenöffnungen für zwei austretende Luftströme, die an gegenüberliegenden Seiten der Düsenöffnung für das Verbindungspolymer angeordnet sind. Die Wellenform bzw. die Oszillationsparameter, wie Amplitude und Frequenz, können bestimmt werden durch Variation eines der Luftströme relativ zum anderen Luftstrom und/oder durch den Volumenstrom bzw. die Strömungsgeschwindigkeit der Luftströme relativ zum Verbindungspolymerstrom. Weiterhin lassen sich die Oszillationsparameter (insbesondere Amplitude, Frequenz) durch den gegenseitigen Abstand, die Form und die Öffnungsweite der Düsenöffnungen sowie auch durch Einstellung der Winkel der Düsenöffnungen zueinander beeinflussen.

Nach einer Ausführungsform der Erfindung wird das fadenförmige schmelzflüssige Verbindungspolymer mit zumindest einer Meltblown-Düse erzeugt. - Es liegt im Rahmen der Erfindung, dass das Verbindungspolymer zunächst aus zumindest einem Extruder extrudiert und zumindest einer Düse, beispielsweise Meltblown-Düse, zugeführt wird. D. h. das extrudierte schmelzflüssige Verbindungspolymer tritt dann aus den Düsenöffnungen der Düse bzw. des Düsenkopfes aus.

Es liegt im Rahmen der Erfindung, dass die erste Werkstoffbahn und/oder die zweite Werkstoffbahn aus einem Polymeren bzw. aus einem Kunststoff besteht. Nach sehr bevorzugter Ausführungsform des erfindungsgemäßen Verfahrens wird mit einer ersten Werkstoffbahn aus einem Polyolefin und/oder einer zweiten Werkstoffbahn aus einem Polyolefin gearbeitet. Vorzugsweise bestehen beide Werkstoffbahnen aus einem Polyolefin und zweckmäßigerweise aus dem gleichen Polyolefin, beispielsweise aus Polyethylen. Nach bevorzugter Ausführungsform der Erfindung wird mit einem Verbindungspolymer gearbeitet, das aus dem gleichen Material besteht wie die erste Werkstoffbahn und/oder die zweite Werkstoffbahn. Vorzugsweise besteht das Verbindungspolymer, die erste Werkstoffbahn und die zweite Werkstoffbahn aus dem gleichen Material, bevorzugt aus dem gleichen Polyolefin, beispielsweise aus Polyethylen oder Polypropylen. Eine solche aus lediglich einem Polymermaterial bestehende Verbundbahn kann auf einfache Weise recycelt werden.

Erfindungsgemäß wird das Verbindungspolymer nicht flächig bzw. vollflächig auf der ersten Werkstoffbahn aufgebracht, sondern in Form von Fäden und zwischen den Fäden bzw. zwischen Fadenabschnitten liegen verbindungspolymerfreie Bereiche. Vorzugsweise wird das Verbindungspolymer mit einer Menge von 0,75 bis 5 g/m², bevorzugt 1 bis 4 g/m² und sehr bevorzugt 1,5 bis 3 g/m² auf die erste Werkstoffbahn aufgespritzt.

Der Erfindung liegt zunächst die Erkenntnis zugrunde, dass mit dem erfindungsgemäßen Verfahren zwei Werkstoffbahnen effektiv und fest miteinander zu der Verbundbahn kombiniert werden können. Nichtsdestoweniger bleiben positive erwünschte Eigenschaften der einzelnen Werkstoffbahnen im Wesentlichen unbeeinträchtigt. So wird eine Atmungsaktivität bzw. Atmungsintensität der Folienbahn nicht negativ beeinflusst. Auch der Weichheitsgrad der offenporigen Werkstoffbahn, insbesondere der Vliesbahn wird nicht nachteilhaft beeinträchtigt. Hervorzuheben ist auch, dass mit dem erfindungsgemäßen Verfahren eine Verbundbahn auf einfache, wenig aufwendige und zugleich kostengünstige Weise hergestellt werden kann. Die erfindungsgemäß hergestellten Verbundbahnen können beispielsweise als Produkte im Hygienebereich oder für das Baugewerbe Anwendung finden.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Darstellung einer Vorrichtung zur Durchführung des erfindungsgemäßen Verfahrens,
- Fig. 2: eine schematische Darstellung von Strömungsverhältnissen an Düsenöffnungen des Gegenstandes nach Fig. 1,
- Fig. 3: eine Draufsicht auf eine erste Werkstoffbahn, auf die das Verbindungspolymer in Form von Fäden aufgebracht wurde und
- Fig. 4: eine andere Ausführungsform des Gegenstandes nach Fig. 3.

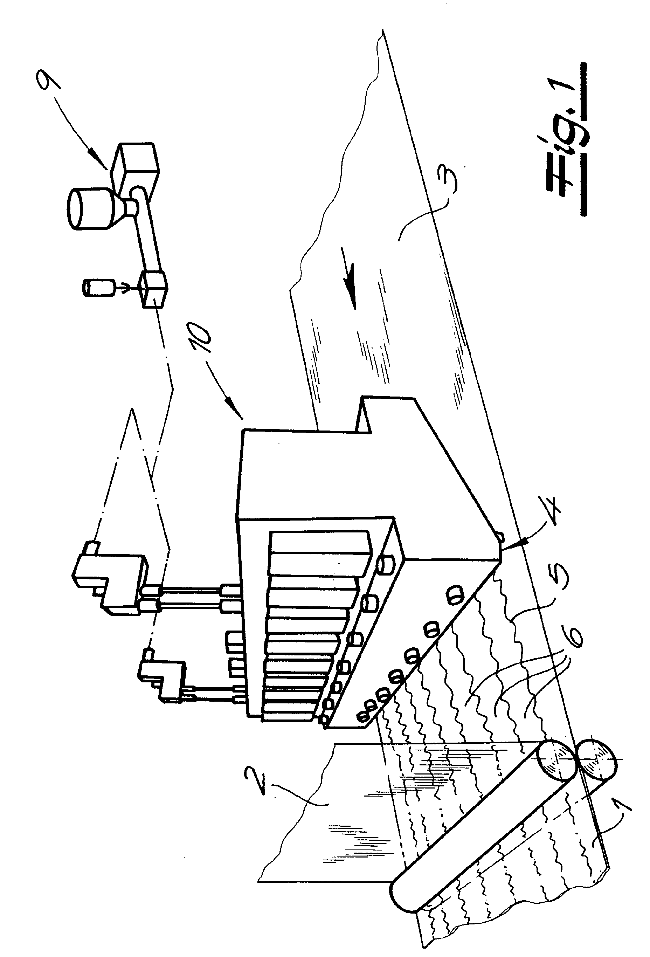

Die Fig. 1 und 2 zeigen eine Vorrichtung zur Durchführung eines erfindungsgemäßen Verfahrens zur Herstellung einer Verbundbahn 1 aus einer offenporigen Werkstoffbahn und einer als Folienbahn ausgeführten Werkstoffbahn. Die offenporige Werkstoffbahn ist vorzugsweise und im Ausführungsbeispiel als Vliesbahn 2 ausgebildet, und die Folienbahn ist im Ausführungsbeispiel als Kunststofffolienbahn 3 ausgeführt. Aus einem Extruder 9 wird ein schmelzflüssiges Verbindungspolymer, beispielsweise ein schmelzflüssiges Polyolefin extrudiert und einem Düsenkopf 10 zugeführt. Der Düsenkopf 10 weist im Ausführungsbeispiel eine Mehrzahl von in einer Reihe angeordneten Düsenöffnungen 4 für den Austritt des schmelzflüssigen Verbindungspolymers auf. Auf der Kunststofffolienbahn 3 als erster Werkstoffbahn wird das aus einer Mehrzahl von Düsenöffnungen 4 austretende schmelzflüssige Verbindungspolymer fadenförmig mit der Maßgabe aufgespritzt, dass zwischen den Verbindungspolymerfäden 5 verbindungspolymerfreie Bereiche 6 auf der Kunststofffolienbahn 3 verbleiben. In Fig. 1 ist erkennbar, dass die Vliesbahn 2 als zweite Werkstoffbahn unter Zwischenschaltung des schmelzflüssigen Verbindungspolymers auf die Kunststofffolienbahn 3 (erste Werkstoffbahn) aufgebracht wird.

Die Figuren zeigen, dass das Verbindungspolymer in Form von wellenförmigen Verbindungspolymerfäden 5 aus den Düsenöffnungen 4 austritt bzw. auf der Kunststofffolienbahn 3 abgelegt wird. Die Wellenform kann dabei symmetrisch oder auch unsymmetrisch sein. Fig. 2 zeigt schematisch eine sehr bevorzugte Ausführungsform zur Erzeugung der Wellenform der Verbindungspolymerfäden 5. Aus einer Düsenöffnung 4 tritt hier der Verbindungspolymerfaden 5 aus. An gegenüberliegenden Seiten dieser Düsenöffnung 4 befinden sich Düsenöffnungen 7, aus denen jeweils ein Luftstrom 8 austritt. Durch Einstellung bzw. Variation der Luftströme 8 bzw. des Verbindungspolymerfadenstromes 5 wird die Wellenform erzeugt. Dazu kann auch auf die Druckschrift US 5 902 540 verwiesen werden.

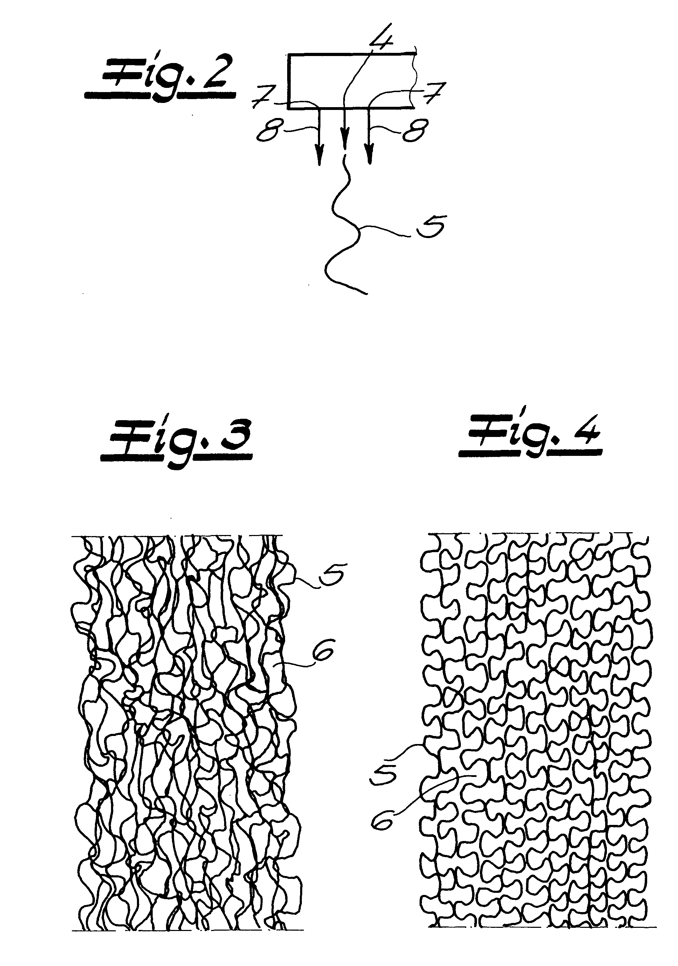

In Fig. 3 ist ein Muster von auf der ersten Werkstoffbahn abgelegten Verbindungspolymerfäden 5 erkennbar. Die Verbindungspolymerfäden 5 haben in diesem abgelegten Zustand eine unregelmäßige bzw. unsymmetrische Wellenform. Fig. 4 zeigt dagegen ein Ausführungsbeispiel, bei dem die Verbindungspolymerfäden 5 als omegaförmige Wellen auf der ersten Werkstoffbahn abgelegt wurden.

## Patentansprüche

1. Verfahren zur Herstellung einer Verbundbahn (1) aus zumindest einer offenporigen Werkstoffbahn und zumindest einer als Folienbahn ausgeführten Werkstoffbahn,
wobei auf einer ersten Werkstoffbahn ein aus einer Mehrzahl von Düsenöffnungen (4) austretendes schmelzflüssiges Verbindungspolymer fadenförmig mit der Maßgabe aufgespritzt wird, dass zwischen den Verbindungspolymerfäden (5) verbindungspolymerfreie Bereiche (6) auf der ersten Werkstoffbahn verbleiben,
und wobei die zweite Werkstoffbahn unter Zwischenschaltung des schmelzflüssigen Verbindungspolymers auf die erste Werkstoffbahn aufgebracht wird.

2. Verfahren nach Anspruch 1, wobei mit einer Vliesbahn (2) oder einer gewebten Bahn als offenporige Werkstoffbahn gearbeitet wird.

3. Verfahren nach einem der Ansprüche 1 oder 2, wobei mit einer Kunststofffolienbahn (3) als Folienbahn gearbeitet wird.

4. Verfahren nach einem der Ansprüche 1 bis 3, wobei die erste Werkstoffbahn, auf die das Verbindungspolymer aufgebracht wird, die Kunststofffolienbahn (3) ist und wobei die offenporige Werkstoffbahn als zweite Werkstoffbahn unter Zwischenschaltung des Verbindungspolymers auf die Kunststofffolienbahn (3) aufgebracht wird.

5. Verfahren nach einem der Ansprüche 1 bis 4, wobei das schmelzflüssige Verbindungspolymer mit einer Fadendicke von 10 bis 50 µm, vorzugsweise von 10 bis 40 µm, bevorzugt von 10 bis 30 µm, aufgespritzt wird.

6. Verfahren nach einem der Ansprüche 1 bis 5, wobei das Verbindungspolymer in Form von wellenförmigen Verbindungspolymerfäden (5) auf der ersten Werkstoffbahn aufgespritzt wird.

7. Verfahren nach einem der Ansprüche 1 bis 6, wobei das Verbindungspolymer als wellenförmiger Verbindungspolymerfaden (5) aus einer Düsenöffnung (4) austritt.

8. Verfahren nach einem der Ansprüche 1 bis 7, wobei das fadenförmige schmelzflüssige Verbindungspolymer mit zumindest einer Meltblown-Düse erzeugt wird.

9. Verfahren nach einem der Ansprüche 1 bis 8, wobei mit einer ersten Werkstoffbahn aus einem Polyolefin und/oder mit einer zweiten Werkstoffbahn aus einem Polyolefin gearbeitet wird.

10. Verfahren nach einem der Ansprüche 1 bis 9, wobei mit einem Verbindungspolymer gearbeitet wird, das aus dem gleichen Material besteht wie die erste Werkstoffbahn und/oder die zweite Werkstoffbahn.

11. Verfahren nach einem der Ansprüche 1 bis 10, wobei das Verbindungspolymer in einer Menge von 0,75 bis 5 g/m², vorzugsweise von 1 bis 4 g/m², aufgespritzt wird.

## Geänderte Patentansprüche

### Geänderte Patentansprüche gemäss Regel 86(2) EPÜ.

**1.** Verfahren zur Herstellung einer Verbundbahn (1) aus zumindest einer offenporigen Werkstoffbahn und zumindest einer als Folienbahn ausgeführten Werkstoffbahn,
wobei mit zumindest einer Meltblown-Düse ein aus einer Mehrzahl von Düsenöffnungen austretendes schmelzflüssiges Verbindungspolymer erzeugt wird,
wobei das Verbindungspolymer in Form von wellenförmigen Verbindungspolymerfäden mit der Maßgabe auf der ersten Werkstoffbahn aufgespritzt wird, dass zwischen den Verbindungspolymerfäden (5) verbindungspolymerfreie Bereiche (6) auf der ersten Werkstoffbahn verbleiben,
und wobei die zweite Werkstoffbahn unter Zwischenschaltung des schmelzflüssigen Verbindungspolymers auf die erste Werkstoffbahn aufgebracht wird.

**2.** Verfahren nach Anspruch 1, wobei mit einer Vliesbahn (2) oder einer gewebten Bahn als offenporige Werkstoffbahn gearbeitet wird.

**3.** Verfahren nach einem der Ansprüche 1 oder 2, wobei mit einer Kunststoffolienbahn (3) als Folienbahn gearbeitet wird.

**4.** Verfahren nach einem der Ansprüche 1 bis 3, wobei die erste Werkstoffbahn, auf die das Verbindungspolymer aufgebracht wird, die Kunststoffolienbahn (3) ist und wobei die offenporige Werkstoffbahn als zweite Werkstoffbahn unter Zwischenschaltung des Verbindungspolymers auf die Kunststoffolienbahn (3) aufgebracht wird.

**5.** Verfahren nach einem der Ansprüche 1 bis 4, wobei das schmelzflüssige Verbindungspolymer mit einer Fadendicke von 10 bis 50 µm, vorzugsweise von 10 bis 40 µm, bevorzugt von 10 bis 30 µm, aufgespritzt wird.

**6.** Verfahren nach einem der Ansprüche 1 bis 5, wobei das Verbindungspolymer als wellenförmiger Verbindungspolymerfaden (5) aus einer Düsenöffnung (4) austritt.

**7.** Verfahren nach einem der Ansprüche 1 bis 6, wobei mit einer ersten Werkstoffbahn aus einem Polyolefin und/oder mit einer zweiten Werkstoffbahn aus einem Polyolefin gearbeitet wird.

**8.** Verfahren nach einem der Ansprüche 1 bis 7, wobei mit einem Verbindungspolymer gearbeitet wird, das aus dem gleichen Material besteht wie die erste Werkstoffbahn und/oder die zweite Werkstoffbahn.

**9.** Verfahren nach einem der Ansprüche 1 bis 8, wobei das Verbindungspolymer in einer Menge von 0,75 bis 5 g/m², vorzugsweise von 1 bis 4 g/m², aufgespritzt wird.
